# EUROPÄISCHE PATENTSCHRIFT

(11) **EP 0 617 137 B1**
(45) Veröffentlichungstag und Bekanntmachung des Hinweises auf die Patenterteilung: **26.01.2000**
(21) Anmeldenummer: 94250061.2
(22) Anmeldetag: 09.03.1994
(51) Int. Cl.: C22B 7/02, C22B 4/00, C21C 5/52, F27B 3/18, F27D 3/18

(54) **Verfahren und Vorrichtung zur Entsorgung von Filterstoffen**
Method and apparatus for treating filter residues
Procédé et dispositif de traitement de résidus de filtrage

(30) Priorität: 26.03.1993 DE 4310779
(43) Veröffentlichungstag der Anmeldung: 28.09.1994
(73) Patentinhaber: MANNESMANN Aktiengesellschaft, 40213 Düsseldorf (DE)
(72) Erfinder: König, Heribert, D-47058 Duisburg (DE); Stark, Heinz, D-45219 Essen (DE)
(74) Vertreter: Meissner, Peter E., Dipl.-Ing.

(56) Entgegenhaltungen:
- DE-A- 1 914 212
- DE-A- 3 830 392
- DE-C- 4 204 769
- FR-A- 2 415 148
- FR-A- 2 652 013
- US-A- 4 213 955

## Beschreibung

Die Erfindung betrifft ein Verfahren zur Entsorgung von Filterstäuben, -schlämmen und -aschen entsprechend dem Oberbegriff des Anspruchs 1 sowie den zur Durchführung des Verfahrens geeigneten Niederschachtofen entsprechend dem Oberbegriff des Anspruchs 6.

Ein Verfahren zum Entsorgen von Schüttgütern ist aus der Schrift DE PS 38 30 392 bekannt, bei dem Filterstäube oder Schlämme in eine oberhalb einer in einem Elektroofen sich befindene Schlackenschicht eingetragen werden. Als Einrichtungen zum Eintragen der zu entsorgenden Güter werden Injektoren, Tauchlanzen, Schneckenförderer oder auch Rührwerke vorgeschlagen. Durch das Einbringen der Schüttgüter unmittelbar in die Schlacke ist das Entsorgungsvolumen u.a. durch die geringe Verweilzeit in der Schlacke begrenzt.

Aus der Schrift DE PS 39 30 852 ist ein Verfahren zur Entsorgung von Filterstäuben bekannt, bei dem die Stäube außerhalb der Werkshallen in eine die Prozeßschlacke enthaltende Pfanne eingeblasen werden. Hierbei werden die Eintauchtiefe und die Winkelstellung der Lanze dem Staubeintrag angepaßt. Der Gegenstand dieser Schrift ist die Einflußnahme auf das Aufschäumen der Schlack beim Einblasen des Staubes. Ein Hinweis auf die Einstellung der Eintauchtiefe in Abhängigkeit des Lanzenverzehrs ist hier nicht zu entnehmen.

Weiterhin ist in der Schrift DE PS 29 00 864 ein Verfahren zum Einblasen von pulverförmigem Material in eine metallurgische Schmelze beschrieben, bei dem das Pulver durch unter besonders hohem Druck stehendes Trägergas unter die Oberfläche der Schmelze gefördert werden soll. Dies zum Frischen und/oder Raffinieren von metallurgischen Schmelzen vorgesehene Verfahren erlaubt nur das Einbringen geringer Mengen an pulverförmigem Material in die Schmelze.
Die genannten Verfahren nehmen im wesentlichen Einfluß auf die Weiterverwendbarkeit insbesondere der Deponierbarkeit der Schlacke.

Die Erfindung hat sich das Ziel gesetzt, ein Verfahren und eine dazu geeignete Vorrichtung zu schaffen, die mit einfachen Mitteln die Eintragsmenge von Filterstoffen wie Stäube, Schlämme und Aschen, in schmelzflüssige Schlacken von Niederschachtöfen zu erhöhen. Darüber hinaus sollen aus der Schlacke maximale Mengen an Wertstoffen gewonnen werden.

Die Erfindung erreicht diese Ziele mit den kennzeichnenden Merkmalen des Verfahrensanspruchs 1 und den Vorrichtungsansprüchen 6.

Durch das vorgeschlagene Verfahren und die Vorrichtung wird in überraschender Weise das prozeßaktive Volumen der Schlacke deutlich erhöht. Das prozeßaktive Volumen wird dabei definiert als Summe eines schmelz- und eines reaktionsaktiven Volumens.
Bei dem schmelzaktiven Volumen handelt es sich um das Schlackevolumen, das im Bereich der Elektrodenspitzen aufgeschmolzene Filterstoffe aufnimmt. Unter der Elektrode bildet sich ein nur relativ kleines Heizvolumen aus, in dem beispielsweise der Filterstaub schmilzt und von der umgebenden Schlacke aufgenommen wird. Dieses schmelzaktive Volumen läßt sich nur in geringem Maße erhöhen.
Bei dem reaktionsaktiven Volumen handelt es sich um das Schlackevolumen, bei dem das Reduktionsmittel mit der Schlacke reagiert. Im Bereich der getauchten Elektroden wird das in die Schlacke eingegebene Reduktionsmittel vom Auftrieb erfaßt und steigt, soweit das Reduktionsmittel im Bereich der Elektrode eingegeben wird, im direkten Umfeld der Elektrodenspitzen zur Schlackeoberfläche auf. Nur auf diesem kurzen Weg mit diesem geringen, die jeweiligen Elektrodenspitze umgebenden Volumen hat das Reduktionsmittel Zeit, mit der Schlacke zu reagieren. Die Reduktionsmittelmenge, die nicht zur Reaktion kommen konnte, legt sich auf der Schlackenoberfläche ab.
Durch das vorgeschlagene Verfahren wird im wesentlichen das reduktionsaktive Volumen vergrößert, was zu einer überraschend hohen Steigerung der Entsorgungsmenge an Filterstoffen führt. Erfindungsgemäß wird das Reduktionsmittel, im wesentlichen der zur Reduktion von Wertstoffoxiden dienende Koksgrus, in den Bereich hoher Wärmekonzentration gefördert. Um die Verweilzeit des Reduktionsmittels zu erhöhen, wird es darüber hinaus möglichst tief in die Schlackeschicht eingebracht.
Neben dem als Reduktionsmittel dienender Koksgrus werden weitere Zuschlagstoffe, nämlich Quarzsand und/oder Kalk, durch eine Lanze in die Schlacke eingebracht. Der Quarzsand und/oder der Kalk dienen wesentlich dazu, den Schmelzpunkt und die Viskosität der Schmelze zu verändern.
Darüber hinaus wird auf die den letzten Widerstand bildenden Größen Einfluß genommen. Eine möglichst hohe Wärmekonzentration wird dabei durch eine gezielte Auslegung der Ofenbaudaten erreicht, wobei 70 % der Energie zwischen rd. 30 % unter den Elektroden eingebracht wird.

Zum Einbringen der Zuschlagsstoffe wird eine Lanze aus Graphit eingesetzt, die einstellbar tief in die Schlacke eingetaucht wird.
Dieses Gemisch aus Quarzsand, Kalk und Koksgrus und ggf. auch Filterstoffen wird durch die Beschickungslanze mit Hilfe von auf einen beliebigen Druck einstellbares Fördergas intensiv in das Schlackevolumen eingewirbelt.

Die Filterstäube, -schlämme und -aschen werden komplett oder zumindes überwiegend über eigene Beschickungswege und Fördermittel direkt der Schlacke zugeführt. Die Filterstoffe können dabei auf oder in das Schlackebad chargiert werden. Zur Maximierung der Einbringungsmenge bei Einsatz geringstmöglicher Förderelemente kann aber auch parallel oder ggf. sogar vollständig das Versorgungsgut durch mit Bohrungen versehene Elektroden chargiert werden.
Die Eintauchtiefe der Lanze wird auf einem vorgegebenen Maß gehalten, wobei u.a. der chemische, abrasive sowie thermische Verzehr der Lanzenmündung durch geeignetes Nachführen ausgeglichen wird.

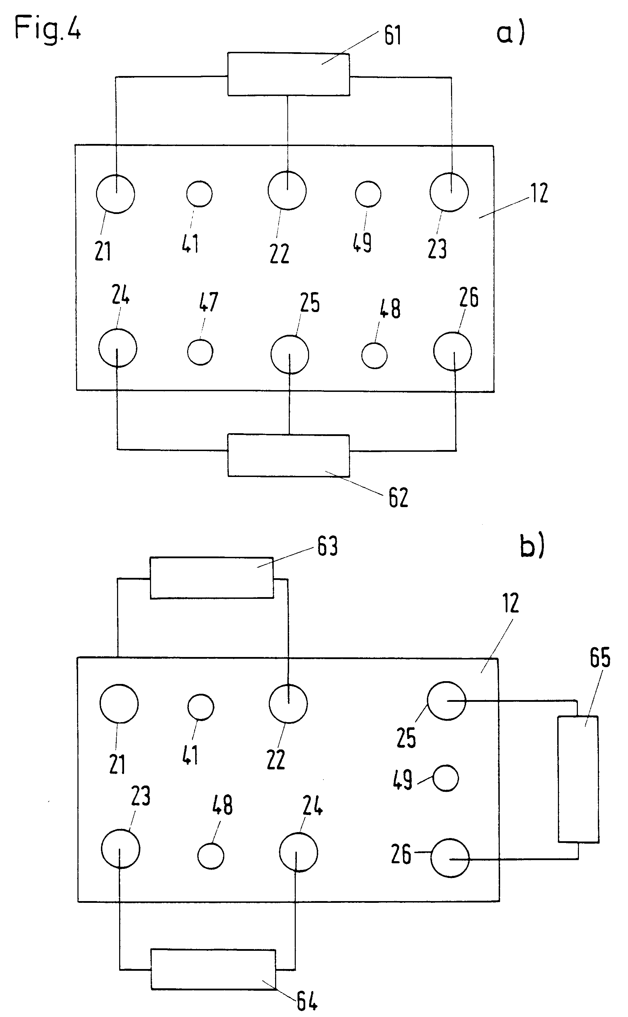

Mit einer Ausgestaltung ist die Lanze als Sternzusetzelektrode ausgeführt, um zusätzlich zu den Elektroden elektrische Energie in Form von Wärmeenergie in die Schlacke einzubringen. Die einzelnen Rohre sind steuerbar tief ins Ofengefäß einfahrbar.
In einer weiteren Ausgestaltung wird ein Ofen mit insgesamt sechs Elektroden versehen, wobei die Lanzen in den jeweiligen Wärmeenergiezentren angeordnet sind. Die genaue Ausgestaltung ist der Figur 4 zu entnehmen.
Ein Beispiel der Erfindung ist in der beigefügten Zeichnung dargelegt.
Dabei zeigen:
die Figur 1 schematisch einen Schnitt durch die Ofenanlage,
die Figur 2 eine Draufsicht
die Figur 3 die elektrische Schaltung bei einer Sternzusatzelektrode.
die Figur 4 Schema einer Sechselektrodenofenanlage

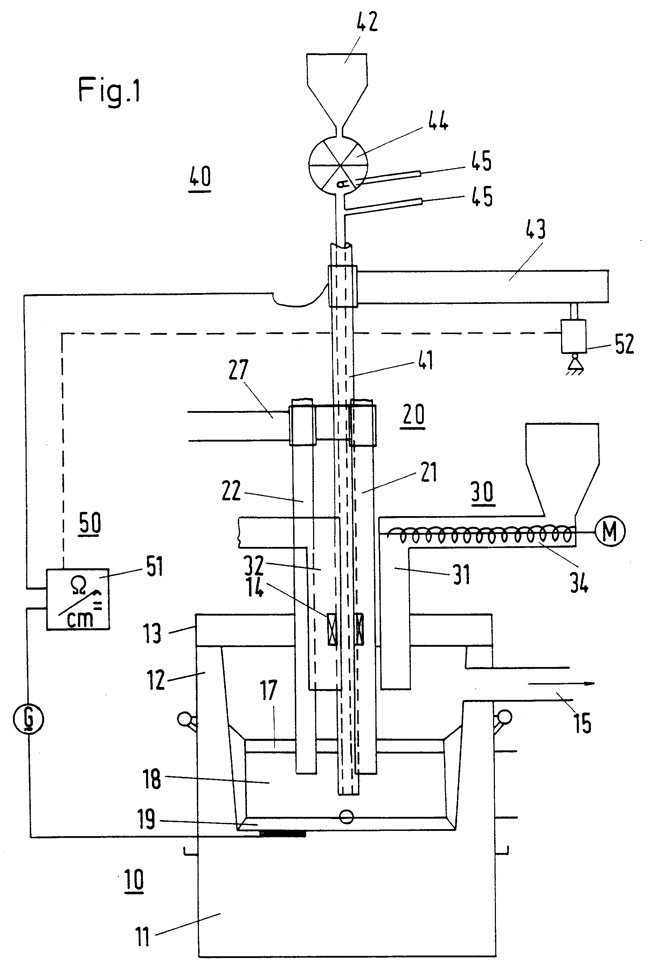

Die Figur 1 zeigt einen Niederschachtofen 10 mit einem Untergefäß 11, einem Obergefäß 12 und einem Deckel 13. Unterhalb des Deckels 13 ist im Obergefäß 12 eine Rauchgasabsaugung 15 vorgesehen.
Im Ofenuntergefäß 11 befindet sich flüssiges Metall 19, auf dem Schlacke 18 und eine Abdeckschicht, z. B. Koksgrus 17, liegt.
Durch den Deckel 13 ragen am Elektrodentragarm 27 befestigte Elektroden 21 bis 23 einer Stromzuführeinrichtung 20.
Die Filterstoffe werden über Entsorgungsgutzuführeinrichtungen 30 zugeführt, die Förderrohre 31-33 aufweisen, die mit Schnecken 34-36 verbunden sind.

Im Zentrum des Ofens ist die Zuschlagstoffzuführeinrichtung 40 angeordnet, die eine an einem Tragarm 43 befestigte Lanze 41 aufweist. Die Lanze 41 ist über eine Dosiereinrichtung 44 mit einer Möllerung 42 verbunden. Die Lanze 41 und/oder die Dosiereinrichtung 44 sind an eine Gasfördereinrichtung 45 angeschlossen. Die Lanze 41 ist durch eine Gleitdichtung 14 vom Deckel 13 getrennt. Der Lanzentragarm 43 ist durch ein Steuergerät 52 vertikal verfahrbar, weiches mit einem Meßinstrument 51 steuerungsmäßig in Verbindung steht. Das Meßinstrument 51 ist meßtechnisch mit der Lanze 41 sowie dem Metallbad 19 verknüpft.

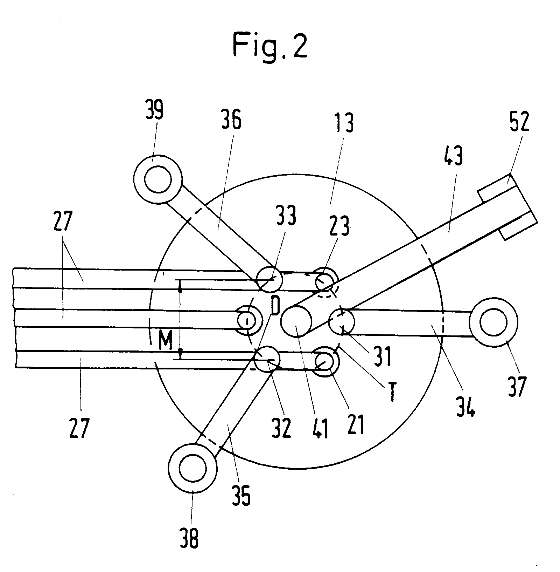

Die Figur 2 zeigt eine Draufsicht des Niederschachtofens mit Elektroden 21-23, die an den Elektrodentragarmen 27 befestigt sind. Unterhalb der Elektrodentragarme 27 sind Schnecken 34-36 vorgesehen, an denen einenends die Förderrohre 31-33 und anderenends die Taschen 37-39 angeschlossen sind.
Oberhalb der Elektrodentragarme 27 ist der mit dem Steuergerät verbundene Tragarm 43 vorgesehen, an dem kopfendig die Lanze 41 befestigt ist.

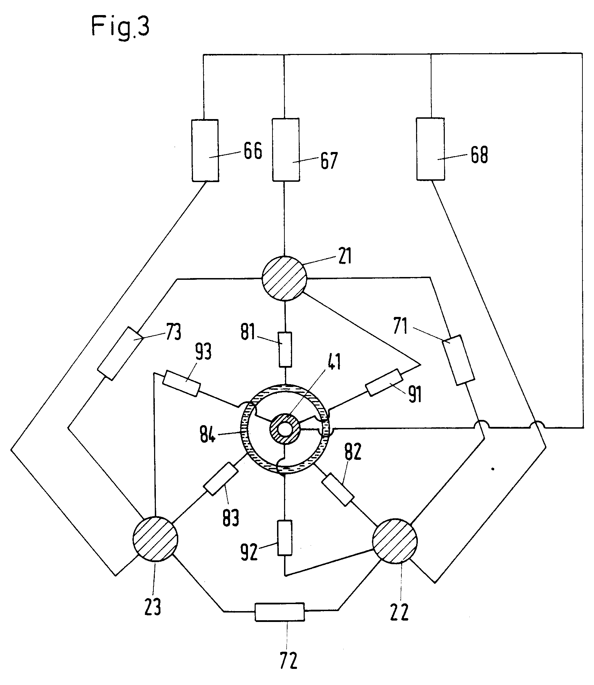

Die Figur 3 zeigt das Schema der elektrischen Steuerung bei Einsatz der Lanze 41 als Sternzusatzelektrode mit den Transformatoren 66-68 sekundär in Sternschaltung angeordnet, den Elektroden 21-23, der Lanzenelektrode 41, den Dreieckswiderständen 71-73, den Sternwiderständen 81-83 und dem Bad 84 sowie den Sternwiderständen 91-93 zwischen den Elektroden 21-23 und der Lanzenelektrode 41.

Die Figur 4 zeigt öfen mit sechs Elektroden. Das Obergefäß 12 dieser Öfen weist eine rechteckige Form auf. Die Elektroden 21-26 sind in der Form einer "Würfelsechs" angeordnet.
Im oberen Teil der Figur 4 sind die Elektroden 21-26 an Drehstromtransformatoren 61,62 angeschlossen. Die Lanzen 41,49 bzw. 47,48 sind in Linie jeweils zwischen zwei Elektroden einer Drehstromtransformatorengruppe angeordnet.

Im unteren Bild sind jeweils zwei Elektroden 21,22 bzw. 23,24 und 25,26 an Einphasentransformatoren 63-65 angeschlossen. Die Lanzen 41,48 und 49 sind jeweils zwischen zwei Elektroden angeordnet.

### Positionsliste

- 10: Niederschachtofen
- 11: Untergefäß
- 12: Obergefäß
- 13: Deckel
- 14: Gleitdichtung
- 16: Rauchgasabsaugung
- 17: Abdeckschicht
- 18: Schlacke
- 19: Metall
- 20: Stromzuführeinrichtung
- 21-26: Elektroden
- 27: Elektrodentragarm
- 30: Entsorgungsgutzuführeinrichtung
- 31-33: Förderrohr
- 34-36: Schnecke
- 40: Zuschlagsstoffzufuhreinrichtung
- 41: Lanze
- 42: Möllerung
- 43: Tragarm
- 44: Dosiereinheit
- 45: Gasfördereinrichtung
- 47-49: Zusatzlanze
- 50: Meßeinrichtung Eintauchtiefe
- 51: Meßinstrument
- 52: Steuergerät
- 60: Stromeinspeisung
- 61,62: Drehstromtransformator
- 63-65: Einphasentransformator
- 66-68: Transformator sekundär in Sternschaltung
- 71-73: Dreieckswiderstände
- 81-83: Sternwiderstände Elektrode/Bad
- 84: Bad
- 91-93: Sternwiderstände Elektrode/Lanze
- D: Durchmesser
- M: Elektrodenmittenabstand
- T: Elektrodenteilkreis

## Patentansprüche

1. Verfahren zur Entsorgung von Filterstoffen, insbesondere aus der Hüttenindustrie oder aus Müllverbrennungsanlagen, bei dem das Entsorgungsgut mit schmelzflüssiger Schlacke eines Elektro-Niederschachtofens in Verbindung gebracht wird,
gekennzeichnet durch folgende Schritte:
a) Das Entsorgungsgut wird über eine Beschickungseinrichtung auf und/oder in das Schlackebad chargiert
b) gleichzeitig werden Flußmittel, Schlackebildner sowie Reduktionsmittel aufweisende Zuschlagsstoffe über eine separate Tauchlanze in die Schlacke eingebracht
c) während der Beschickung der Zuschlagsstoffe werden die den elektrischen Widerstand bildenden Größen, im wesentlichen der Elektrodendurchmesser sowie Elektrodenmittenabstand, wobei der Elektrodendurchmesser (D) sich zum Elektrodenmittenabstand (M) wie D/M= 0,25-0,35 verhält, die Höhe des Schlackebades und die Eintauchtiefe der Elektroden in der Weise eingestellt, daß 70 % der elektrischen Energie zwischen Elektroden und 30 % der elektrischen Energie zwischen Elektroden und dem auf dem Herdboden befindlichen Metallbad eingebracht wird.

2. Verfahren nach Anspruch 1,
dadurch gekennzeichnet,
daß zusätzliche Zuschlags- und/oder Entsorgungsstoffe über die mit Hohlbohrungen versehenen Elektroden chargiert werden.

3. Verfahren nach Anspruch 1,
dadurch gekennzeichnet,
daß die Zuschlagsstoffe in das Zentrum der höchsten Energiekonzentration eingebracht werden.

4. Verfahren nach Anspruch 3,
dadurch gekennzeichnet,
daß die Zuschlagsstoffe unter Berücksichtigung des Verzehrs der Tauchlanze im Bereich ihrer Mündung in steuerbarer, einstellbarer geometrischer Lage in das Schlackebad eingebbar sind.

5. Verfahren nach Anspruch 4,
dadurch gekennzeichnet,
daß über die Tauchlanze zusätzlich zu den Elektroden elektrische Energie in das Schmelzbad eingebracht wird.

6. Niederschachtofen zur Durchführung des Verfahrens nach Anspruch 1 mit mindestens drei Elektroden, die durch den Deckel des geschlossenen Ofengefäßes in die sich im Untergefäß des Ofens befindliche auf einem Melallbad schwimmende schmelzflüssige Schlacke hineinragen,
dadurch gekennzeichnet,
daß die Elektroden (21-26) einen Durchmesser (D) aufweisen, der sich zum Elektrodenmittenabstand (M) verhält wie D/M=0,25-0,35, daß mindestens eine unterhalb des Deckels (13) im Obergefäß (12) des Niederschachtofens (10) mündende Förderrohr (31-33) einer Entsorgungsgutzufuhreinrichtung (30) vorgesehen ist, und daß achsparallel zu den Elektroden (21-26) und zu diesen den gleichen Abstand aufweisend eine an einen vertikal verfahrbaren Tragarm (43) befestigbare, an eine Möllerung (42) angeschlossene Lanze (41,47-49) angeordnet ist, die über eine Gleitdichtung (14) mit dem Ofendeckel (13) in Verbindung steht.

7. Niederschachtofen nach Anspruch 6,
dadurch gekennzeichnet,
daß die Lanze (41,47-49) aus dem gleichen Material wie die Elektroden (21-26), nämlich Graphit, gefertigt ist.

8. Niederschachtofen nach Anspruch 7,
dadurch gekennzeichnet,
daß ein mit dem Metallschmelzbad (19) und dem Kopfende der Lanze (41,47-49) verbundenes Meßinstrument (51) zur Erfassung der Eintauchtiefe der Lanze vorgesehen ist, das über ein Steuergerät (52) den Lanzentragarm (43) vertikal bewegt.

9. Niederschachtofen nach Anspruch 7,
dadurch gekennzeichnet,
daß die Lanze (41) als Elektrode ausgeführt ist, wobei die Elektroden (21-23) in einem Drehstromsystem an in Stern geschaltete Transformatorenwicklungen angeschlossen sind und die als Elektrode ausgebildete Lanze (41) mit dem Sternpunkt des Transformatorstranges verbunden ist.

10. Niederschachtofen nach Anspruch 6,
dadurch gekennzeichnet,
daß die Lanze (41,47-49) über eine Dosiereinheit (44) mit der Möllerung (42) verbunden ist.

11. Niederschachtofen nach Anspruch 10,
dadurch gekennzeichnet,
daß die Dosiereinheit (44) an eine Gasfördereinrichtung (45) angeschlossen ist.

12. Niederschachtofen nach Anspruch 6,
dadurch gekennzeichnet,
daß bei einem mit drei mit Drehstrom betriebenen Elektroden ausgerüsteten Niederschachtofen insgesamt drei im wesentlichen auf dem Teilkreis T der Elektroden (21-23) mittig zwischen ihnen angeordnete Förderrohre (31-33) vorgesehen sind, die jeweils an eine volumendosierbare Zuführung, z.B. Schnecken (34-36) angeschlossen sind.

13. Niederschachtofen nach Anspruch 12,
dadurch gekennzeichnet,
daß die Förderrohre (31-33) steuerbar vertikal bewegbar sind.

14. Niederschachtofen nach Anspruch 6,
dadurch gekennzeichnet,
daß die Elektroden (21-23) als Hohlelektroden ausgebildet sind, die an eine Entsorgungsgutfördereinrichtung (30) angeschlossen sind.

15. Niederschachtofen nach Anspruch 14,
dadurch gekennzeichnet,
daß sechs Elektroden (21-26) vorgesehen sind, die paarweise in Dreierreihen zueinander angeordnet sind, und daß bei Anschluß der Elektroden (21-23,24-26) an Drehstromtransformatoren (61,62) die Lanzen (41,49 bzw. 47,48) sich zwischen den in Reihe angeordneten Elektroden befinden.

16. Niederschachtofen nach Anspruch 14,
dadurch gekennzeichnet,
daß sechs Elektroden (21-26) vorgesehen sind, die paarweise (21,22, bzw. 23,24 oder 25,26) an Einphasentransformatoren angeschlossen sind, und daß die Lanzen (41,46 oder 49) jeweils zwischen den Elektroden (21,22 bzw. 23,24 und 25,26) angeordnet sind.

## Claims

1. A method for disposing of filter materials, in particular from the metallurgical industry or from refuse combustion plants, in which the material for disposal is brought into contact with molten slag from an electric low-shaft furnace,
characterised by the following steps:
a) the material for disposal is charged on to and/or into the slag bath by means of a charging means,
b) at the same time, fluxes, slag-forming constituents and additives containing reducing agents are introduced into the slag via a separate immersed lance,
c) during the charging of the additives, the variables forming the electrical resistance, essentially the electrode diameter and distance between electrode centres, the ratio of electrode diameter (D) to the distance between electrode centres (M) being D/M = 0.25-0.35, the height of the slag bath and the immersion depth of the electrodes, are adjusted such that 70% of the electrical energy is introduced between electrodes and 30% of the electrical energy is introduced between electrodes and the metal bath located on the hearth bottom.

2. A method according to Claim 1, characterised in that additional additives and/or materials for disposal are charged via the electrodes, which are provided with hollow bores.

3. A method according to Claim 1, characterised in that the additives are introduced into the centre of the highest energy concentration.

4. A method according to Claim 3, characterised in that the additives can be introduced into the slag bath in a controllable, adjustable geometric position, taking into account the consumption of the immersed lance in the region of its mouthpiece.

5. A method according to Claim 4, characterised in that electricity is introduced into the melt bath via the immersed lance in addition to the electrodes.

6. A low-shaft furnace for performing the method according to Claim 1, comprising at least three electrodes, which project through the cover of the closed furnace vessel into the molten slag which is located in the lower vessel of the furnace and floats on a metal bath,
characterised in that
the electrodes (21-26) have a diameter (D) which is in a ratio to the distance between electrode centres (M) of D/M = 0.25-0.35, that at least one conveying pipe (31-33) of a supply means (30) for material for disposal is provided which opens beneath the cover (13) in the upper vessel (12) of the low-shaft furnace (10), and that paraxially to the electrodes (21-26) and having the same distance therefrom a lance (41, 47-49) which can be fastened to a vertically moveable supporting arm (43) and is connected to a burden means (42) is arranged which communicates with the furnace cover (13) via a sliding seal (14).

7. A low-shaft furnace according to Claim 6,
characterised in that the lance (41, 47-49) is made from the same material as the electrodes (21-26), namely graphite.

8. A low-shaft furnace according to Claim 7,
characterised in that a measuring instrument (51) connected to the metal melt bath (19) and the top end of the lance (41, 47-49) is provided for detecting the immersion depth of the lance, which instrument moves the lance supporting arm (43) vertically by means of a control apparatus (52).

9. A low-shaft furnace according to Claim 7,
characterised in that the lance (41) is in the form of an electrode, the electrodes (21-23) being connected to transformer windings connected in a star configuration in a three-phase system and the lance (41) formed as an electrode being connected to the star point of the line of transformers.

10. A low-shaft furnace according to Claim 6,
characterised in that the lance (41, 47-49) is connected to the burden means (42) via a metering unit (44).

11. A low-shaft furnace according to Claim 10,
characterised in that the metering unit (44) is connected to a gas conveying means (45).

12. A low-shaft furnace according to Claim 6,
characterised in that in a low-shaft furnace equipped with three electrodes operated with three-phase current a total of three conveying tubes (31-33) arranged centrally therebetween substantially on the graduated circle T of the electrodes (21-23) is provided, each of which is connected to a volume-metering supply means, e.g. worms (34-36).

13. A low-shaft furnace according to Claim 12,
characterised in that the conveying tubes (31-33) are vertically moveable in controlled manner.

14. A low-shaft furnace according to Claim 6,
characterised in that the electrodes (21-23) are in the form of hollow electrodes which are connected to a conveying means (30) for material for disposal.

15. A low-shaft furnace according to Claim 14,
characterised in that six electrodes (21-26) are provided, which are arranged in pairs in rows of three, and that when the electrodes (21-23, 24-26) are connected to three-phase transformers (61, 62) the lances (41, 49 or 47, 48) are located between the electrodes which are arranged in rows.

16. A low-shaft furnace according to Claim 14,
characterised in that six electrodes (21-26) are provided, which are connected in pairs (21, 22, or 23, 24, or 25, 26) to single-phase transformers, and that the lances (41, 46 or 49) are each located between the electrodes (21, 22 or 23, 24 and 25, 26).

## Revendications

1. Procédé pour éliminer des matières de filtrage, en particulier à partir de l'industrie sidérurgique ou d'installations de combustion de déchets, dans lequel le produit d'élimination est amené en liaison avec du laitier en fusion d'un bas fourneau électrique,
caractérisé par les étapes suivantes :
a) le produit d'élimination est chargé par l'intermédiaire d'un dispositif de chargement sur et/ou dans le bain de laitier,
b) simultanément, des granulats présentant des fondants, des fondants de scorification, ainsi que des agents de réduction sont introduits dans le laitier par l'intermédiaire d'une lance de plongée séparée,
c) pendant le chargement des granulats, les grandeurs formant la résistance électrique, généralement le diamètre des électrodes ainsi que l'écartement moyen des électrodes, le diamètre des électrodes (D) étant, par rapport à l'écartement moyen des électrodes (M), dans le rapport D/M = 0,25-0,35, la hauteur du bain de laitier et la profondeur de plongée des électrodes, sont réglées de facon que 70% de l'énergie électrique sont appliqués entre les électrodes et 30% de l'énergie électrique entre les électrodes et le bain métallique se trouvant sur la sole.

2. Procédé selon la revendication 1,
caractérisé en ce que des matières supplémentaires d'élimination et/ou des granulats sont chargés par l'intermédiaire des électrodes munies de percages.

3. Procédé selon la revendication 1,
caractérisé en ce que les granulats sont introduits au centre de la plus forte concentration d'énergie.

4. Procédé selon la revendication 3,
caractérisé en ce que les granulats peuvent être introduits dans le bain de laitier, dans une position géométrique réglable de façon commandable, en tenant compte de la consommation de la lance de plongée dans la zone de son embouchure.

5. Procédé selon la revendication 4,
caractérisé en ce que de l'énergie électrique est amenée dans le bain de fusion par l'intermédiaire de la lance de plongée, en plus des électrodes.

6. Bas fourneau pour la mise en oeuvre du procédé selon la revendication 1, comportant au moins trois électrodes, qui, à travers le couvercle du récipient de four fermé, pénètrent dans le laitier en fusion flottant sur un bain métallique se trouvant dans le récipient inférieur du four, caractérisé en ce que les électrodes (21-26) présentent un diamètre (D), qui, par rapport à l'écartement moyen des électrodes (M), est dans le rapport D/M = 0,25-0,35, en ce qu'au moins un tube d'amenée (31,33), débouchant au-dessous du couvercle (13) dans le récipient supérieur (12) du bas fourneau (10), d'un dispositif d'amenée de produit d'élimination (30) est prévu, et en ce que, présentant, parallèlement à l'axe par rapport aux électrodes (21-26) et à celles-ci, le même écartement, il est agencé une lance (41,47-49) raccordée à un mélangeur (42) et pouvant être fixée à un bras de support (43) verticalement déplacable, lance qui est en liaison avec le couvercle de four (13) par l'intermédiaire d'un joint étanche coulissant (14).

7. Bas fourneau selon la revendication 6,
caractérisé en ce que la lance (41,47-49) est fabriquée à partir du même matériau que les électrodes (21-26), c'est-à-dire du graphite.

8. Bas fourneau selon la revendication 7,
caractérisé en ce qu'un instrument de mesure (51) pour détecter la profondeur de plongée de la lance, relié au bain de fusion métallique (19) et à l'extrémité de tête de la lance (41,47-49), est prévu, qui déplace verticalement le bras de support de lance (43) par l'intermédiaire d'un appareil de commande (52).

9. Bas fourneau selon la revendication 7,
caractérisé en ce que la lance (41) est réalisée comme électrode, les électrodes (21-23) étant raccordées dans un système de courant triphasé aux enroulements de transformateur montés en étoile et la lance (41), réalisée comme électrode, étant reliée au point neutre de la barre de transformateur.

10. Bas fourneau selon la revendication 6,
caractérisé en ce que la lance (41,47-49) est reliée, par l'intermédiaire d'une unité de dosage (44), au mélangeur (42).

11. Bas fourneau selon la revendication 10,
caractérisé en ce que l'unité de dosage (44) est raccordée au dispositif d'amenée de gaz (45).

12. Bas fourneau selon la revendication 6,
caractérisé en ce que, dans le cas d'un bas fourneau équipé de trois électrodes fonctionnant en courant triphasé, en totalité trois tubes d'amenée (31-33), agencés généralement sur le cercle (T) des électrodes (21-23) de façon centrale entre elles, sont prévus, lesquels, sont raccordés, à chaque fois, à une amenée, dont le volume peut être dosé, par exemple des vis sans fin (34-36).

13. Bas fourneau selon la revendication 12,
caractérisé en ce que les tubes d'amenée (31,33) sont déplacables verticalement de facon commandable.

14. Bas fourneau selon la revendication 6,
caractérisé en ce que les électrodes (21-23) sont réalisées comme électrodes creuses qui sont raccordées à un dispositif d'amenée de produit d'élimination (30).

15. Bas fourneau selon la revendication 14,
caractérisé en ce que six électrodes (21-26) sont prévues, qui sont agencées par paire, en série de trois, les unes par rapport aux autres, et en ce que, lors du raccordement des électrodes (21-23, 24-26) à des transformateurs à courant triphasé (61,62), les lances (41,49 ou 47,48) se trouvent entre les électrodes agencées en série.

16. Bas fourneau selon la revendication 14,
caractérisé en ce que six électrodes (21-26) sont prévues, qui sont raccordées à des transformateurs monophasés par paire (21,22 ou 23,24 ou 25,26), et en ce que les lances (41,46 ou 49) sont agencées, à chaque fois, entre les électrodes (21,22 ou 23,24 et 25,26).
